(19) Europäisches Patentamt
European Patent Office
Office européen des brevets

(11) **EP 4 098 955 A1**

(12) **EUROPEAN PATENT APPLICATION**

(43) Date of publication:
**07.12.2022 Bulletin 2022/49**

(21) Application number: **22174350.3**

(22) Date of filing: **19.05.2022**

(51) International Patent Classification (IPC):
*F25B 49/02* $^{(2006.01)}$   *F25B 13/00* $^{(2006.01)}$
*F25B 25/00* $^{(2006.01)}$

(52) Cooperative Patent Classification (CPC):
**F25B 49/02; F25B 13/00; F25B 25/005;**
F25B 2313/003; F25B 2339/047; F25B 2500/26;
F25B 2500/27; F25B 2600/01; F25B 2600/025;
F25B 2600/0253; F25B 2600/19; F25B 2600/23;
F25B 2700/21152; F25B 2700/21163

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.06.2021   JP 2021092080**

(71) Applicant: **Toshiba Carrier Corporation
Kawasaki-Shi,
Kanagawa 212-8585 (JP)**

(72) Inventors:
• **WATANABE, Shinya
Shizuoka-ken, 416-8521 (JP)**
• **SUGA, Tooru
Shizuoka-ken, 416-8521 (JP)**

(74) Representative: **Gramm, Lins & Partner
Patent- und Rechtsanwälte PartGmbB
Frankfurter Straße 3 C
38122 Braunschweig (DE)**

(54) **HEAT PUMP TYPE HEAT SOURCE APPARATUS**

(57)     A heat pump type heat source apparatus includes: a refrigeration cycle provided with a compressor, a first heat exchanger, an expansion device, and a second heat exchanger; a heat-medium flow passage that is connected to the first heat exchanger of the refrigeration cycle as a flow passage of a heat medium circulating via the first heat exchanger; a temperature sensor installed in the refrigeration cycle, and configured to detect a temperature of the refrigeration cycle; and a controller configured to change a lower limit of an operating frequency of the compressor based on a temperature detected by the temperature sensor so that a compression ratio of the compressor is maintained within a usage range, when the compressor is driven under low differential pressure operation in which difference between suction pressure and discharge pressure is small.

FIG. 1

## Description

### TECHNICAL FIELD

Embodiments of the present invention relate to a heat pump type heat source apparatus.

### BACKGROUND

A refrigeration apparatus provided with a conventional heat pump type refrigerating cycle, for example, a mediumsized or large-sized air conditioner includes a high-pressure sensor provided on the discharge side of a compressor and a low-pressure sensor provided on the suction side of the compressor. The air conditioner controls the operating frequency of the compressor on the basis of the pressure detected by these pressure sensors in such a manner that each of the pressure on the discharge side of the compressor, the pressure on the suction side of the compressor, and the compression ratio falls within the appropriate range.

[Patent Document 1] JP H10-185373 A

In order to control the operating frequency of the compressor so that each of the pressure on the discharge side of the compressor, the pressure on the suction side of the compressor, and the compression ratio falls within the usage range specified by the specifications of the compressor, the air conditioner is conventionally provided with a high-pressure sensor arranged on the discharge side of the compressor and a low-pressure sensor arranged on the suction side of the compressor.

In this context, the heat pump type heat source apparatus needs to maintain the target heat medium such as hot water at the setting temperature. When the temperature of the heat medium circulating in the utilization side rises near the setting temperature under the operating conditions where the outside temperature is high and the setting temperature on the utilization side is low, the heat pump type heat source apparatus gradually decreases the operating frequency of the compressor so as to reduce its capacity, and finally decreases the rotation frequency of the compressor. The compressor at this time is in low differential pressure operation state in which the difference between the suction pressure and the discharge pressure is small. In extremely low differential pressure operation, there is a possibility that the compression ratio falls outside the usage range of the compressor.

In order to maintain the compression ratio within the usage range during the low differential pressure operation of the compressor, it is conceivable to provide two pressure sensors including one on the suction side and the other on the discharge side of the compressor like a conventional air conditioner for controlling the operating frequency of the compressor. However, in terms of reliability of the entire apparatus, support at the time of sensor failure, manufacturability of the apparatus, and manufacturing cost of the apparatus, it is desirable to maintain the compression ratio during the low differential pressure operation of the compressor within the usage range without using any pressure sensor.

### Summary of the Invention

An object of the present invention is to provide a heat pump type heat source apparatus that can maintain the compression ratio of the compressor within the usage range during its low differential pressure operation without detecting the pressure of the refrigerant.

The present invention provides a heat pump type heat source apparatus comprising: a refrigeration cycle that includes a compressor, a first heat exchanger, an expansion device, and a second heat exchanger; a heat-medium flow passage that is connected to the first heat exchanger of the refrigeration cycle as a flow passage of a heat medium circulating via the first heat exchanger; a temperature sensor installed in the refrigeration cycle, and configured to detect a temperature of the refrigeration cycle; and a controller configured to change a lower limit of an operating frequency of the compressor based on a temperature detected by the temperature sensor so that a compression ratio of the compressor is maintained within a usage range, when the compressor is driven under low differential pressure operation in which difference between suction pressure and discharge pressure is small.

### BRIEF DESCRIPTION OF THE DRAWINGS

In the accompanying drawings:

Fig. 1 is a block diagram of a heat pump type heat source apparatus according to one embodiment of the present invention;
Fig. 2 is a diagram schematically illustrating relationship between the suction pressure of the compressor, the discharge pressure of the compressor, and the usage range of the compression ratio;
Fig. 3 is a flowchart illustrating lower limit control of the operating frequency of the compressor to be executed by the heat pump type heat source apparatus according to the embodiment of the present invention; and

Fig. 4 is a schematic diagram illustrating a correction value to be used by the heat pump type heat source apparatus according to the embodiment of the present invention for correction processing of the lower limit of the operating frequency of the compressor.

## DETAILED DESCRIPTION

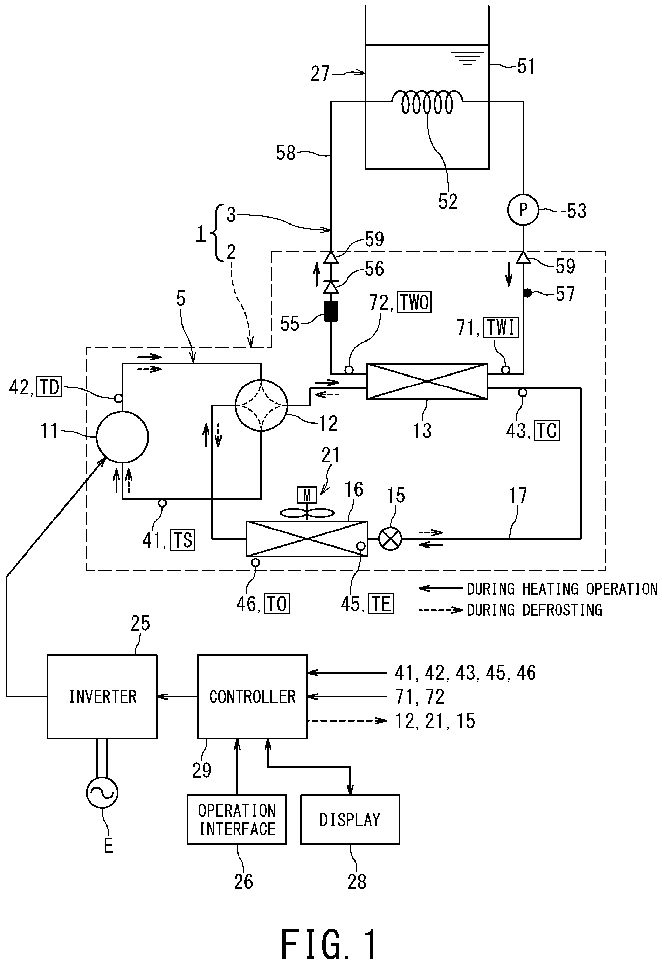

Hereinbelow, embodiments of a heat pump type heat source apparatus (i.e., heat-medium circulation type heat pump apparatus) according to the present invention will be described by referring to Fig. 1 to Fig. 4. The same reference signs are given for identical or equivalent components in each figure.

Fig. 1 is a block diagram of a heat pump type heat source apparatus 1 according to one embodiment of the present invention.

As shown in Fig. 1, the heat pump type heat source apparatus 1 according to the present embodiment includes: a heat source unit 2 that exchanges heat between a circulating refrigerant and the outside air and exchanges heat between the circulating refrigerant and a circulating heat medium; and a load unit 3 that circulates and uses the heat medium warmed by the heat source unit 2.

In the following description, the heat pump type heat source apparatus 1 is shortly referred to as a heat pump apparatus 1.

The heat source unit 2 includes a refrigeration cycle 5. The refrigeration cycle 5 includes: a compressor 11; a four-way valve 12; a first heat exchanger 13; an expansion valve 15 as an expansion device; a second heat exchanger 16; and refrigerant piping 17 that connects these components 11 to 16 in sequence. The refrigeration cycle 5 circulates the refrigerant in these refrigeration cycle components 11 to 16. The refrigerant circulating in the refrigeration cycle 5 is, for example, R410A or R32.

The first heat exchanger 13 is also called a water heat exchanger, and is a heat exchanger configured to exchange heat between the heat medium and the refrigerant circulating in the load unit 3. In the case of heating the heat medium, the flow direction of the refrigerant flowing through the refrigerant pipe 17 is set by the four-way valve 12 configured to control the flow direction of the refrigerant in such a manner that the first heat exchanger 13 functions as a condenser and the second heat exchanger 16 functions as an evaporator.

The compressor 11 includes: a high-pressure container; a compression mechanism housed in the high-pressure container; and a DC brushless motor that is housed in the high-pressure container and drives the compression mechanism by using an inverter 25 as a power source. The compressor 11 compresses the refrigerant by using the compression mechanism so as to boost its pressure, and discharges the refrigerant in a high-temperature and high-pressure state. The compressor 11 changes its operating frequency by using the inverter 25. The amount of heat to be transferred to the high temperature portion increases by increasing the rotation speed of the compressor 11, and the amount of heat to be transferred to the high temperature portion decreases by decreasing the rotation speed.

The expansion valve 15 is, for example, an electronic expansion valve (PMV: Pulse Motor Valve). The opening degree of the expansion valve 15 is adjusted depending on the state of the refrigeration cycle. The expansion valve 15 is provided in the refrigerant piping 17 so as to be inserted in series between the first heat exchanger 13 and the second heat exchanger 16. The expansion valve 15 decompresses the refrigerant and causes the refrigerant in a low-temperature and low-pressure state to flow out.

The second heat exchanger 16 is also called an air heat exchanger. The second heat exchanger 16 exchanges heat between the refrigerant in the refrigerant piping 17 and the atmosphere of the second heat exchanger 16, usually the outside air.

The heat source unit 2 includes: a blower fan 21 that blows out the outside air subjected to heat exchange in the second heat exchanger 16; a plurality of temperature sensors that detect the temperatures of the respective portions of the refrigeration cycle 5; an inverter 25 that is connected to a commercial AC power supply E and drives the DC brushless motor of the compressor 11 at variable speeds; an operation interface (i.e., input interface) 26 that is an input device configured to receive operations by a user; a display 28 that displays the operating state and contents of settings of the heat source unit 2 and a utilization-side device 27 as operating conditions; and a controller 29 that controls the operation of the heat source unit 2 and the operation of the utilization-side device 27 on the basis of the user's operation on the operation interface 26.

The plurality of temperature sensors provided on respective portions include: a suction temperature sensor 41 that is provided in the refrigerant piping 17 on the suction side of the compressor 11 and detects the temperature TS of the refrigerant to be sucked into the compressor 11; a discharge temperature sensor 42 that is attached to the refrigerant piping 17 on the discharge side of the compressor 11 as in the conventional technique and detects the temperature TD of the refrigerant to be discharged from the compressor 11; a refrigerant-outlet-side temperature sensor 43 that is provided in the refrigerant piping 17 and detects the temperature TC (condensation temperature) of the heatexchanged refrigerant flowing out of the first heat exchanger 13; a refrigerant temperature sensor 45 that is provided in the second heat exchanger 16 and detects the temperature TE (i.e., evaporation temperature) of the refrigerant flowing through the second heat exchanger 16; and an outside-air temperature sensor 46 configured to detect the outside air temperature, or the outside temperature TO.

The outside-air temperature sensor 46 is disposed on the upstream side of the second heat exchanger 16 in the ventilation direction of the blower fan 21 in order to accurately detect the outside air temperature.

The heat source unit 2 is not provided with a pressure sensor that detects the pressure of the refrigerant circulating in the refrigeration cycle 5.

The load unit 3 includes: the first heat exchanger 13 shared by the load unit 3 and the heat source unit 2; and the utilization-side device 27. The utilization-side device 27 includes a hot water tank 51 and a utilization-side heat exchanger 52, and the utilization-side heat exchanger 52 is disposed in the hot water tank 51 and exchanges heat between the liquid (hot water) in the hot water tank 51 and the heat medium having been subjected to heat exchange in the first heat exchanger 13.

Although the heat medium circuit illustrated is a closed circuit, it does not need to be a closed circuit. The heat medium circuit includes a heat-medium flow passage 58. A circulation pump 53 configured to circulate the heat medium, a constant flow valve 55 configured to keep the circulation flow rate of the heat medium constant, a check valve 56 configured to prevent backflow of the heat medium, the hot water tank 51, a flowmeter 57, and the first heat exchanger 13 are connected via the heat-medium flow passage 58 such that water as the heat medium circulates in these components via the heat-medium flow passage 58. Although the heat medium is water in general, antifreeze may be used to prevent freezing.

The user of the heat pump apparatus 1 inputs a desired setting temperature in the load unit 3 via the operation interface 26. The heat pump apparatus 1 is used for keeping the liquid, which is exemplified by hot water in the hot water tank 51 to be used externally in the load unit 3, at a high temperature at all times. Thus, the setting temperature of the heat medium to be set via the operation interface 26 is determined by the request on the side of using the hot water. This setting temperature is, for example, 30°C to 64°C, which is higher than the setting temperature of the air conditioner for heating.

The circulation pump 53 circulates the heat medium between the first heat exchanger 13 and the utilization-side device 27 by operation. The circulation pump 53, the constant flow valve 55, the check valve 56, and the flowmeter 57 may be provided in the heat-medium flow passage 58 on the side of the load unit 3 or may be provided in the heat-medium flow passage 58 on the side of the heat source unit 2. When the refrigerant circulating in the refrigerant piping 17 is hotter than the heat medium circulating in the heat-medium flow passage 58, the heat medium is heated by the first heat exchanger 13, then heats the liquid in the hot water tank 51 by the utilization-side heat exchanger 52 (i.e., radiator), and then dissipates heat so as to be returned to the first heat exchanger 13.

The heat-medium flow passage 58 includes a plurality of pipe joints 59. These pipe joints 59 detachably connect the heat source unit 2 and the load unit 3.

In order to control the temperature of the heat medium, the heat source unit 2 includes: a heat-medium inlet temperature sensor 71 that is disposed on the inlet side of the first heat exchanger 13 and detects the temperature TWI of the heat medium flowing into the first heat exchanger 13; and a heat-medium outlet temperature sensor 72 that is disposed on the outlet side of the first heat exchanger 13 and detects the temperature TWO of the heat medium flowing out of the first heat exchanger 13. The temperature TWI is the temperature of the heat medium before heat exchange with the refrigerant of the refrigeration cycle 5 in the first heat exchanger 13, i.e., is the return temperature. The temperature TWO is the temperature of the heat medium after heat exchange with the refrigerant of the refrigeration cycle 5 in the first heat exchanger 13, i.e., is the supply temperature.

The load unit 3 may include a flowmeter 57 configured to detect the flow rate of the heat medium circulating in the heat-medium flow passage 58. The circulation flow rate of the heat medium may be a flow rate to be stored in advance corresponding to the rotation speed of the circulation pump 53 instead of being detected by the flowmeter 57. Additionally or alternatively, the circulation flow rate of the heat medium may be a flow rate to be set by manual input.

The controller 29 includes hardware resources such as a processor, a memory, and its peripheral circuit. The controller 29 is composed of a computer that causes its processor to execute various programs so as to perform information processing of software using the hardware resources.

In addition, the controller 29 controls the operation of the heat source unit 2 and the operation of the load unit 3 on the basis of the input operation via the operation interface 26. In other words, the controller 29 controls the operation of the compressor 11, the inverter 25, the four-way valve 12, the expansion valve 15, and the blower fan 21 on the basis of the user's input operation via the operation interface 26.

The controller 29 controls the shutdown of the compressor 11, the rotation speed of the compressor 11, the direction of the four-way valve 12, the opening degree of the expansion valve 15, the shutdown of the blower fan 21, and the rotation speed of the blower fan 21 on the basis of at least one of the detected or calculated circulation flow rate of the heat medium and the detected temperature values of the respective portions measured by the suction temperature sensor 41, the discharge temperature sensor 42, the refrigerant-outlet-side temperature sensor 43, the refrigerant temperature sensor 45, the outside-air temperature sensor 46, the heat-medium inlet temperature sensor 71, and the heat-medium outlet temperature sensor 72. For example, the rotation speed of the compressor 11, i.e., the output frequency of the inverter 25 is determined depending on the difference between the detected temperature of the heat-medium outlet temperature sensor 72 and the setting temperature of the heat medium having been set by the operation interface 26. In addition, the condensation temperature, which is the detection temperature of the refrigerant-outlet-side temperature sensor 43, is used for preventing the refrigeration cycle components such as the first heat exchanger 13 from becoming abnormally high pressure, for example. In other words, when the condensation temperature equivalent to the detection temperature of the refrigerant-outlet-side temperature sensor 43 exceeds a predetermined value such as 65°C, the rotation speed of the compressor 11 is decreased.

In order to remove the frost generated in the second heat exchanger 16 during the operation of heating the heat medium in the first heat exchanger 13, the refrigeration cycle 5 switches the flow direction of the refrigerant flowing through the refrigerant piping 17 by using the four-way valve 12 so as to perform defrosting operation. When performing the defrosting operation, the heat pump apparatus 1 inverts the four-way valve 12 such that the flow of the refrigerant is generated in the refrigeration cycle 5 in the direction opposite to the flow of the refrigerant heating the heat medium. In other words, the refrigeration cycle 5 circulates the refrigerant in the order of the compressor 11, the four-way valve 12, the second heat exchanger 16, the expansion valve 15, the first heat exchanger 13, the four-way valve 12, and the compressor 11. During this defrosting operation, the second heat exchanger 16 functions as a condenser and the first heat exchanger 13 functions as an evaporator. The second heat exchanger 16 functioning as a condenser dissolves the frost attached to the surface.

For warm regions where the defrosting operation is not required, the refrigeration cycle 5 may be dedicated to heating water without the four-way valve 12. In this case, the discharge side of the compressor 11 is connected to the first heat exchanger 13 via the refrigerant piping 17, and the suction side of the compressor 11 is connected to the second heat exchanger 16 via the refrigerant piping 17.

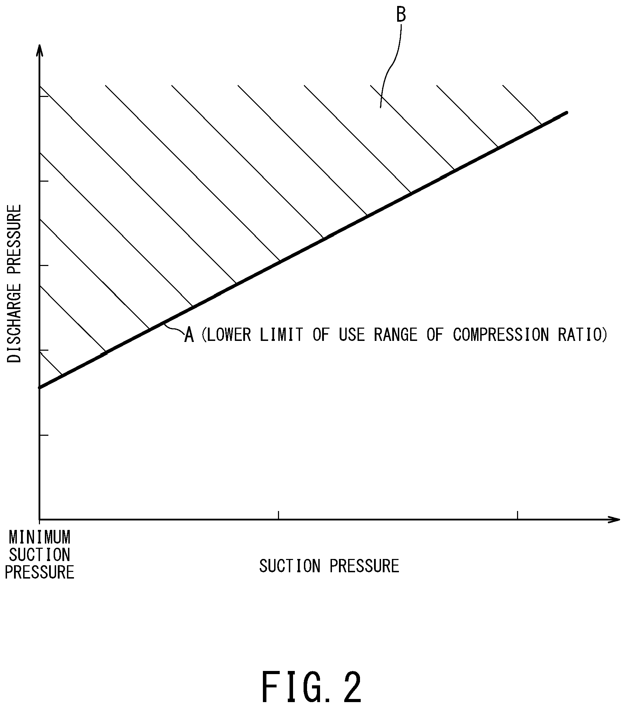

In Fig. 2, the horizontal axis indicates the suction pressure of the compressor 11, the vertical axis indicates the discharge pressure, and the left end of the horizontal axis indicates the minimum suction pressure value that can be used during stable operation of the compressor 11 excluding transitional periods such as the start-up period of the compressor 11. The line segment A in Fig. 2 indicates the lower limit of the usage range of the compression ratio of the compressor 11.

As shown in Fig. 2, the lower limit of the usage range of the compression ratio of the compressor 11 can be expressed by the upward-sloping line segment A that is proportional to the suction pressure and the discharge pressure of the compressor 11. Steady operation of the compressor 11 in the state below the line segment A is not acceptable from the viewpoint of the reliability of the compressor. In other words, the compression ratio of the compressor 11 at the time of the steady operation is required to belong to the region B that is equal to or above the line segment A.

The low compression-ratio state in which difference between the suction pressure and the discharge pressure is small is located in the vicinity of the line segment A.

The heat pump apparatus 1 according to the present embodiment does not have a pressure sensor in the refrigeration cycle 5. Thus, the heat pump apparatus 1 cannot control the operating frequency of the compressor 11 on the basis of the pressure detected by a pressure sensor such that each of the discharge pressure of the compressor, the suction pressure of the compressor, and the compression ratio falls in the usable (i.e., acceptable or operable) range (region B).

In order to maintain the compression ratio of the compressor 11 within the usage range, it is conceivable to set the output frequency of the inverter 25, i.e., the lower limit of the operating frequency of the compressor 11 to a higher value in advance so as not to enter the region B equal to or above the line segment A of the compressor 11. However, when the lower limit of the operating frequency is raised, the minimum capacity of the refrigeration cycle 5 is increased and the heating capacity range of the heat pump apparatus 1 becomes narrow, which reduces its efficiency. It is not desirable that any one of the discharge pressure of the compressor 11, the suction pressure of the compressor 11, and the compression ratio deviates from the usage range, because the failure risk of the compressor 11 increases.

Thus, when the compressor 11 is in the low differential pressure operation state with small difference between the suction pressure and the discharge pressure, the controller 29 of the heat pump apparatus 1 according to the present embodiment changes the lower limit of the operating frequency of the compressor 11 on the basis of the temperature detected by the temperature sensor configured to detect the temperature at any portion of the refrigeration cycle 5 such that the compression ratio of the compressor 11 does not deviate from the usage range.

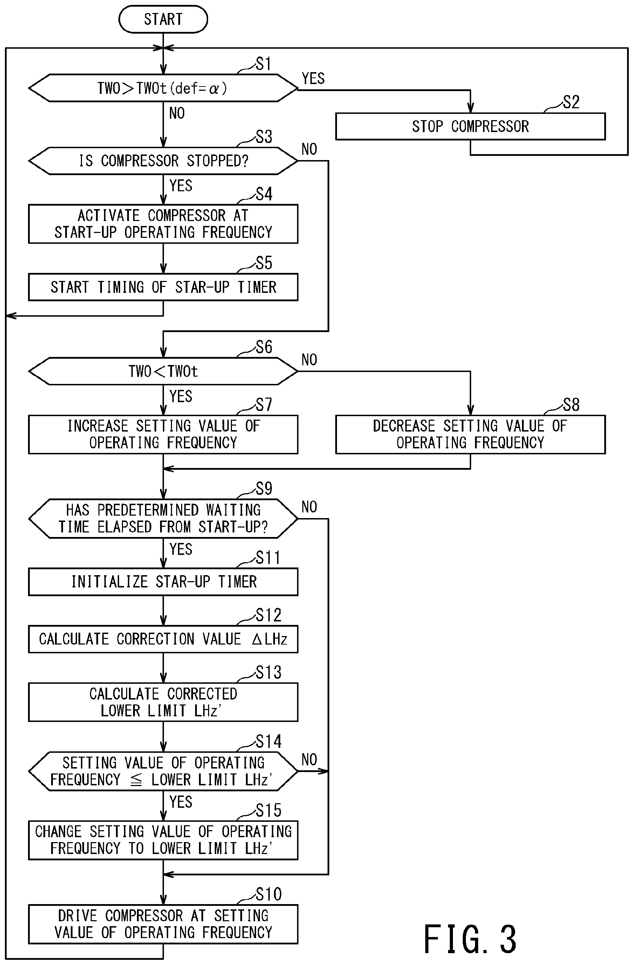

Fig. 3 is a flowchart of lower limit control of the operating frequency of the compressor 11 to be executed by the heat pump type heat source apparatus 1 according to the embodiment of the present invention.

As shown in Fig. 3, after the start-up of the heat pump apparatus 1, in the step S1, its controller 29 determines magnitude relationship between the outlet temperature TWO of the heat medium in the first heat exchanger 13 and the setting temperature TWOt of the heat medium having been set to the controller 26. Specifically, while the compressor 11 is stopped, it is determined in the step S1 whether the outlet temperature TWO is equal to or lower than the value of the setting temperature TWOt or not. While the compressor 11 is operating, it is determined whether the outlet temperature TWO exceeds the value of "setting temperature TWO + α" or not.

If the determination result in the step S1 is positive as YES (i.e., in the case where the condition of "temperature TWO > setting temperature TWOt + α" is established while the compressor is operating, and in the case where the condition of "temperature TWO > setting temperature TWOt" is established while the compressor is stopped), the controller 29 stops the compressor 11 or maintains the stopped state of the compressor 11 in the step S2, and then the processing returns to the step S1. The deferential value α is, for example, 2°C.

If the determination result in the step S1 is negative as NO (i.e., in the case where the condition of "temperature TWO ≤ setting temperature TWOt + α" is established while the compressor is operating, and in the case where the condition of "temperature TWO ≤ setting temperature TWOt" is established while the compressor is stopped), the operation of the compressor 11 is started or continued in the subsequent step. Specifically, in the step S3, the controller 29 determines whether the compressor 11 is currently stopped or not. If the compressor 11 is stopped (YES in the step S3), the controller 29 activates, i.e., starts the compressor 11 in the step S4, then substantially simultaneously starts timing (i.e., clocking) of the start-up timer in the step S5, and then the processing returns to the step S1.

If the determination result in the step S3 is negative as NO, i.e., if the compressor is in operation, the operation of the compressor 11 is continued and the processing proceeds to the step S6 to start the control of determining the operating frequency of the compressor 11. In the step S6, the controller 29 determines whether the temperature TWO of the heat medium flowing out of the first heat exchanger 13 is lower than the setting temperature TWOt or not.

If the temperature TWO of the heat medium flowing out of the first heat exchanger 13 is lower than the setting temperature TWOt (i.e., if "temperature TWO < setting temperature TWOt") as YES in the step S6, the processing proceeds to the step S7 in which the controller 29 increases the setting value of the operating frequency of the compressor 11 at predetermined time intervals.

Conversely, if the temperature TWO of the heat medium flowing out of the first heat exchanger 13 is equal to or higher than the setting temperature TWOt (i.e., if "temperature TWO ≥ setting temperature TWOt") as NO in the step S6, the processing proceeds to the step S8 in which the controller 29 decreases the setting value of the operating frequency of the compressor 11 at predetermined time intervals. The increase in the operating frequency in the step S7 is, for example, 5 Hz/30 seconds, and the decrease in the operating frequency in the step S8 is, for example, 5 Hz/60 seconds. The rate of increase and decrease of the operating frequency may be the same or different. In order to prevent extreme overshoot, a differential of the determination condition of the step S6 may be provided as "TWO < TWOt-β", wherein the differential value β is 2°C, for example.

Although the operating frequency of the compressor 11 is determined by the integral (I) control as described above in the present embodiment, the operating frequency may be determined by the proportional integral (PI) control on the basis of the temperature difference of "temperature TWOsetting temperature TWOt". Additionally or alternatively, an appropriate operating frequency may be determined as PID control by incorporating differential control.

In the next step S9, the controller 29 determines whether a predetermined waiting time has elapsed from the start-up of the compressor 11 or not. The predetermined waiting time is set in order to prevent the correction processing of the lower limit of the operating frequency (i.e., processing of the steps S12 to S15 described below) from being executed in the activation transition of the compressor 11. The predetermined waiting time is set to, for example, 600 seconds.

If the determination result in the step S9 is negative, i.e., if the predetermined waiting time has not elapsed from the start-up of the compressor 11 (No in the step S9), the processing proceeds to the step S10 in which the controller 29 drives the compressor 11 at the setting frequency having been set in the step S7 or S8 via the inverter 25, and then the processing returns to the step S1. After elapse of the predetermined waiting time from the start-up of the compressor 11, the setting frequency in the step S10 is changed also by the correction processing of the lower limit of the operating frequency described below, in addition to the step S7 or S8.

If the determination result in the step S9 is positive, i.e., if the predetermined waiting time (for example, 600 seconds) has elapsed from the start-up of the compressor 11 (YES in the step S9), the controller 29 initializes the clocking of the start-up timer (i.e., sets it to zero or resets it) in the step S11, and then executes the correction processing of the lower limit of the operation frequency described below.

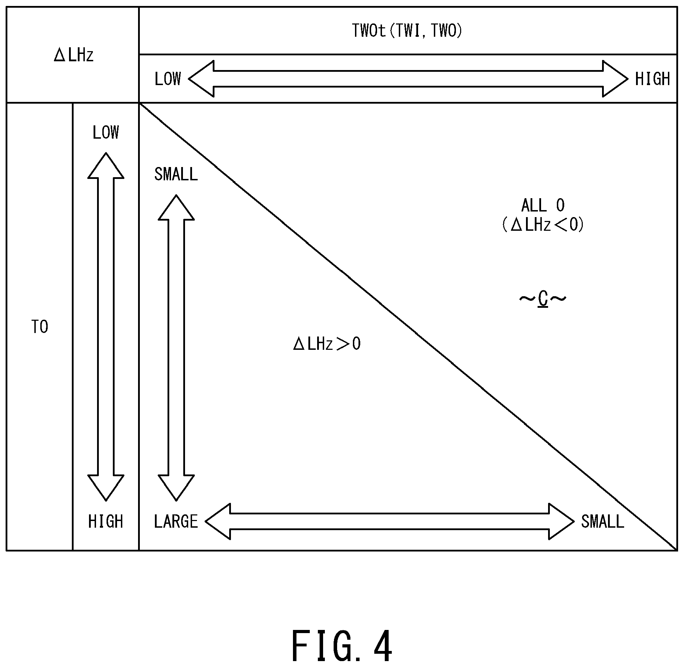

The correction processing of the lower limit of the operating frequency of the compressor 11 will be described by referring to Fig. 4.

As shown in Fig. 4, the controller 29 of the heat pump apparatus 1 calculates the correction value ΔLHz from the setting temperature TWOt and the outside temperature TO, which is the ambient temperature of the installation location of the second heat exchanger 16. The correction value ΔLHz is a correction value for raising the lower limit of the operating frequency of the compressor 11, and is a positive value.

The correction value ΔLHz becomes larger as the outside temperature TO becomes higher, and becomes larger as the setting temperature TWOt becomes lower. In other words, the correction value ΔLHz becomes smaller as the outside temperature TO becomes lower, and becomes smaller as the setting temperature TWOt becomes higher.

The correction value ΔLHz is a negative value in the right-angled triangular region C having a right angle on the upper right side in Fig. 4. In this region C, the correction value ΔLHz is set to a zero value. In other words, in the region C, the condition of "correction value ΔLHz = 0" is satisfied.

In the region where the correction value ΔLHz is a positive value, if the control for raising the lower limit of the operating frequency in the present embodiment is not executed, there is a possibility that the compression ratio of the compressor 11 deviates from the usage range (deviation can be shown in the region below line segment A in Fig. 2).

The correction value ΔLHz is calculated on the basis of Expression 1 below by using an outside-air reference value a1, an outside-air correction value b1, and a setting reference value c1. The outside-air reference value a1, the outside-air correction value b1, and the setting reference value c1 are fixed values that are experimentally determined in advance.

```
Expression 1

correction value ΔLHz

 = correction amount X + correction amount Y


correction amount X = outside temperature TO

 + {outside temperature TO - outside-air correction value a1}

×outside-air correction value b1 - setting temperature TWOt


correction amount Y

= setting reference value c1 - setting temperature TWOt
```

As shown in Fig. 4, the correction value ΔLHz is set to be equal to or higher than a zero value. In other words, if the calculation result of the correction value ΔLHz becomes a negative value, it is changed to zero.

On the basis of Expression 2 below, the lower limit of the operating frequency of the compressor 11 is corrected as LHz' which is the sum of the initial lower limit LHz of the operating frequency of the compressor 11 and the correction value ΔLHz.

```
Expression 2

corrected lower limit LHz' =

        initial lower limit LHz + correction value ΔLHz
```

The initial lower limit LHz of the operating frequency of the compressor 11 is set to the lowest operating frequency value at which the compressor 11 in use can be operated in the normal operating range without any trouble. The initial lower limit LHz is, for example, 12 to 30 hertz (Hz) in a general rotary compressor.

The outside-air reference value a1, the outside-air correction value b1, and the setting reference value c1 differ depending on the capacity of the refrigeration cycle 5 and the load of the load unit 3. The outside-air reference value a1 and the setting reference value c1 are experimentally determined on the basis of the specifications of the heat pump apparatus 1 and the compressor 11. The outside-air correction value b1 is experimentally set such that the compression ratio of the compressor 11 belongs to the region B equal to or above the line segment A in Fig. 2 by the correction of Expression 2.

Returning to Fig. 3, in the step S12, the controller 29 calculates the correction value ΔLHz, which is calculated by Expression 1 and has the relationship shown in Fig. 4.

In the next step S13, the controller 29 calculates the corrected lower limit LHz' on the basis of Expression 2.

The corrected lower limit LHz' is set to a value larger than the initial lower limit LHz only in the case of "correction value ΔLHz > 0".

In the next step S14, the controller 29 determines whether the setting value of the operating frequency of the compressor 11 determined in the step S7 or S8 is smaller than the corrected lower limit LHz' or not.

If the setting value of the operating frequency of compressor 11 is smaller than the corrected lower limit LHz' (YES in the step S14), the controller 29 changes the setting value of the operating frequency of the compressor 11 to the corrected lower limit LHz' in the step S15, then drives the compressor 11 at the setting value of the operating frequency via the inverter 25 in the step S10, and then returns the processing to the step S1.

Conversely, if the setting value of the operating frequency of compressor 11 is equal to or larger than the corrected lower limit LHz' (NO in the step S14), the processing proceeds to the step S10 in which the controller 29 drives the compressor 11 at the setting value of the operating frequency determined in the step S7 or S8 via the inverter 25, and then the processing returns to the step S1.

As described above, when the compressor 11 is driven under low differential pressure operation, the heat pump apparatus 1 according to the present embodiment changes the lower limit of the operating frequency of the compressor 11 on the basis of the temperature detected by the temperature sensor in such a manner that the compression ratio of the compressor 11 does not deviate from the usage range. Thus, even without providing a pressure sensor in the refrigeration cycle 5, the heat pump apparatus 1 can reduce the risk of failure of the compressor 11 by driving the compressor 11 while maintaining the compression ratio of the compressor 11 within the usage range.

Additionally, the heat pump apparatus 1 according to the present embodiment changes the lower limit of the operating frequency of the compressor 11 depending on the level of the outside temperature TO and the level of the setting temperature TWOt of the load unit 3. In other words, the heat pump apparatus 1 changes the lower limit of the operating frequency of the compressor 11 on the basis of the setting temperature TWOt of the load unit 3 generally desired by a user and the outside-air temperature sensor 46, which is generally provided in a heat pump apparatus and is not exposed to rapid temperature change. Here, the outside temperature TO and the setting temperature TWOt indicate a temperature of the refrigeration cycle 5, and also are temperatures related to operating conditions of the refrigeration cycle 5. In the present embodiment, the outside temperature TO and the setting temperature TWOt are temperatures related to an operating state, specifically an operating frequency, of the compressor 11 at the time when the temperature of the heat medium is brought closer to the setting temperature TWOt. Hence, the heat pump apparatus 1 can reduce the risk of failure of the compressor 11 at extremely low cost without requiring a dedicated temperature sensor or pressure sensor, which is so used for control of the operating frequency of the compressor 11 as to maintain the compression ratio of compressor 11 within the usage range.

Further, the heat pump apparatus 1 according to the present embodiment raises the lower limit of the operating frequency of the compressor 11 as the outside temperature TO becomes higher, and raises the lower limit of the operating frequency of the compressor 11 as the setting temperature TWOt of the load unit 3 becomes lower. Thus, the heat pump apparatus 1 can reduce the risk of failure of the compressor 11 by driving the compressor 11 under low differential pressure operation while maintaining the compression ratio of the compressor 11 within the usage range with respect to the wide ranges of the outside temperature TO and the setting temperature TWOt.

Hence, the heat pump apparatus 1 according to the present embodiment can maintain the compression ratio within the usage range during the low differential pressure operation of the compressor 11 without detecting the pressure of the refrigerant.

The compressor 11 is driven under low differential pressure operation in the state where the temperature of the heat medium is near the setting temperature TWOt. That is, in such a state, the temperature TWI of the heat medium flowing into the first heat exchanger 13 to be detected by the heat-medium inlet temperature sensor 71 and the temperature TWO of the heat medium flowing out of the first heat exchanger 13 to be detected by the heat-medium outlet temperature sensor 72 indicate a value close to the setting temperature TWOt. For this reason, the setting temperature TWOt in Expression 2 to be used in the calculation of the correction value ΔLHz may be replaced by the temperature TWI of the heat medium flowing into the first heat exchanger 13 to be detected by the heat-medium inlet temperature sensor 71 or the temperature TWO of the heat medium flowing out of the first heat exchanger 13 to be detected by the heat-medium outlet temperature sensor 72. In this case, the correction value ΔLHz becomes a large value in the state where the temperature of the heat medium is far from the setting temperature TWOt to the lower temperature side. However, since the operating frequency of the compressor 11 is controlled to be high in such a situation, even if the correction value ΔLHz becomes large and the lower limit LHz' of the operating frequency of the compressor 11 is set to a higher value, there is almost no adverse effect on the temperature control of the heat medium. In this case, the outside-air reference value a1 and the outside-air correction value b1, which are the coefficients in Expression 2, can be used without changing their values, and it is preferred to slightly change the setting reference value c1.

The heat source unit 2 constituting the heat pump type heat source apparatus 1 may be housed in one integrated housing. Additionally or alternatively, the heat pump type heat source apparatus 1 may have a two-housing configuration in which the first heat exchanger 13 and other refrigeration cycle components are separately housed in two housings.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

List of References

| 1 | heat pump type heat source apparatus |
|---|---|
| 2 | heat source unit |
| 3 | load unit |
| 5 | refrigeration cycle |
| 11 | compressor |
| 13 | first heat exchanger |
| 16 | second heat exchanger 冷 |
| 25 | inverter |
| 26 | operation interface (input interface) |
| 27 | utilization-side device |
| 28 | display |
| 29 | controller |
| 41 | suction temperature sensor |
| 42 | discharge temperature sensor |
| 43 | refrigerant-outlet-side temperature sensor |
| 45 | refrigerant temperature sensor |
| 46 | outside-air temperature sensor |
| 51 | hot water tank |
| 52 | utilization-side heat exchanger |
| 71 | heat-medium inlet temperature sensor |
| 72 | heat-medium outlet temperature sensor |

Claims

1. A heat pump type heat source apparatus (1) comprising:

a refrigeration cycle (5) that includes a compressor (11), a first heat exchanger (13), an expansion device (15), and a second heat exchanger (16);
a heat-medium flow passage (58) that is connected to the first heat exchanger (13) of the refrigeration cycle (5) as a flow passage of a heat medium circulating via the first heat exchanger (13);
a temperature sensor (46, 71, 72) installed in the refrigeration cycle (5), and configured to detect a temperature of the refrigeration cycle (5); and
a controller (29) configured to change a lower limit of an operating frequency of the compressor (11) based on a temperature detected by the temperature sensor (46, 71, 72) so that a compression ratio of the compressor (11) is maintained within a usage range, when the compressor (11) is driven under low differential pressure operation in which difference between suction pressure and discharge pressure is small.

2. The heat pump type heat source apparatus (1) according to claim 1, further comprising an input interface (26) via which a setting temperature of the heat medium can be inputted, wherein:

the temperature sensor (46) is configured to detect an ambient temperature at an installation location of the second heat exchanger (16); and
the controller (29) is configured to change the lower limit of an operating frequency depending on the ambient temperature and the setting temperature.

**3.** The heat pump type heat source apparatus (1) according to claim 2, wherein the controller (29) is configured to raise the lower limit of an operating frequency as the ambient temperature becomes higher, and is further configured to raise the lower limit of an operating frequency as the setting temperature becomes lower.

**4.** The heat pump type heat source apparatus (1) according to claim 1, wherein:

the temperature sensor (46, 71, 72) is configured to detect a temperature of the heat medium flowing through the first heat exchanger (13) and an ambient temperature of an installation location of the second heat exchanger (16); and
the controller (29) is configured to change the lower limit of an operating frequency depending on the ambient temperature and the temperature of the heat medium.

**5.** The heat pump type heat source apparatus (1) according to claim 4, wherein the temperature of the heat medium is a temperature of the heat medium flowing out of the first heat exchanger (13).

**6.** The heat pump type heat source apparatus (1) according to claim 4, the temperature of the heat medium is a temperature of the heat medium flowing into the first heat exchanger (13).

**7.** The heat pump type heat source apparatus (1) according to any one of claim 4 to claim 6, wherein the controller (29) is configured to raise the lower limit of an operating frequency as the ambient temperature becomes higher, and is further configured to raise the lower limit of the operating frequency as the temperature of the heat medium becomes lower.

**8.** The heat pump type heat source apparatus (1) according to any one of claim 1 to claim 7, further comprising a utilization-side device (27) that is connected to the first heat exchanger (13) of the refrigeration cycle (5) via the heat-medium flow passage (58) and uses the heat medium subjected to heat exchange in the first heat exchanger (13) as a heat source.

**9.** The heat pump type heat source apparatus (1) according to claim 8, wherein the utilization-side device (27) is a hot water tank (51) configured to storage hot water, and to heat the hot water through heat exchange with the heat medium.

**10.** The heat pump type heat source apparatus (1) according to any one of claim 1 to claim 9, wherein the heat medium is water.

DURING HEATING OPERATION
DURING DEFROSTING

FIG. 1

FIG. 2

FIG. 3

| △LHz | | TWOt(TWI,TWO) | |
|---|---|---|---|
| | | LOW ⟵⟶ HIGH | |

FIG.4

Europäisches Patentamt

European Patent Office

Office européen des brevets

# EUROPEAN SEARCH REPORT

Application Number

EP 22 17 4350

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/144965 A1 (UEDA KENJI [JP] ET AL) 7 July 2005 (2005-07-07) * paragraphs [0005] – [0025], [0048] – [0096]; figures 1-7 * | 1-10 | INV. F25B49/02 F25B13/00 F25B25/00 |
| X | EP 0 899 520 A2 (MITSUBISHI ELECTRIC CORP [JP]) 3 March 1999 (1999-03-03) * paragraphs [0036], [0037], [0047], [0050] – [0063]; figures 1,6 * | 1-4,7 | |
| A | EP 3 006 859 A1 (MITSUBISHI ELECTRIC CORP [JP]) 13 April 2016 (2016-04-13) * paragraph [0012] – paragraph [0047]; figures 1,3 * | 1-10 | |
| A | WO 2013/165841 A1 (JOHNSON CONTROLS TECH CO [US]) 7 November 2013 (2013-11-07) * paragraphs [0044] – [0052]; figures 3,7-9 * | 1-10 | |

TECHNICAL FIELDS SEARCHED (IPC)

F25B

The present search report has been drawn up for all claims

| Place of search | Date of completion of the search | Examiner |
|---|---|---|
| Munich | 14 September 2022 | Gasper, Ralf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 4350

This annex lists the patent family members relating to the patent documents cited in the above-mentioned European search report.
The members are as contained in the European Patent Office EDP file on
The European Patent Office is in no way liable for these particulars which are merely given for the purpose of information.

14-09-2022

| Patent document cited in search report | | Publication date | Patent family member(s) | | Publication date |
|---|---|---|---|---|---|
| US 2005144965 | A1 | 07-07-2005 | CN | 1629495 A | 22-06-2005 |
| | | | JP | 4727142 B2 | 20-07-2011 |
| | | | JP | 2005180267 A | 07-07-2005 |
| | | | US | 2005144965 A1 | 07-07-2005 |
| EP 0899520 | A2 | 03-03-1999 | EP | 0899520 A2 | 03-03-1999 |
| | | | ES | 2223098 T3 | 16-02-2005 |
| | | | JP | 3598809 B2 | 08-12-2004 |
| | | | JP | H11132606 A | 21-05-1999 |
| | | | US | 5970727 A | 26-10-1999 |
| EP 3006859 | A1 | 13-04-2016 | CN | 104236167 A | 24-12-2014 |
| | | | CN | 105247296 A | 13-01-2016 |
| | | | EP | 3006859 A1 | 13-04-2016 |
| | | | JP | WO2014196045 A1 | 23-02-2017 |
| | | | US | 2016084556 A1 | 24-03-2016 |
| | | | WO | 2014196045 A1 | 11-12-2014 |
| WO 2013165841 | A1 | 07-11-2013 | CN | 104220822 A | 17-12-2014 |
| | | | EP | 2844931 A1 | 11-03-2015 |
| | | | JP | 5865549 B2 | 17-02-2016 |
| | | | JP | 2015522737 A | 06-08-2015 |
| | | | KR | 20140135225 A | 25-11-2014 |
| | | | TW | 201400774 A | 01-01-2014 |
| | | | US | 2015056059 A1 | 26-02-2015 |
| | | | WO | 2013165841 A1 | 07-11-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10185373 A